Europäisches Patentamt

European Patent Office

Office européen des brevets

(19)

(11) Veröffentlichungsnummer: **0 129 567**
**B1**

(12) **EUROPÄISCHE PATENTSCHRIFT**

(45) Veröffentlichungstag der Patentschrift:
**15.07.87**

(51) Int. Cl.⁴: **A 22 C 29/02**

(21) Anmeldenummer: **84900027.8**

(22) Anmeldetag: **01.12.83**

(86) Internationale Anmeldenummer:
**PCT/DE 83/00198**

(87) Internationale Veröffentlichungsnummer:
**WO 84/02061 (07.06.84 Gazette 84/14)**

(54) **VERFAHREN UND VORRICHTUNG ZUM SCHÄLEN VON GARNELEN.**

(30) Priorität: **01.12.82 DE 3244359**

(43) Veröffentlichungstag der Anmeldung:
**02.01.85 Patentblatt 85/1**

(45) Bekanntmachung des Hinweises auf die Patenterteilung:
**15.07.87 Patentblatt 87/29**

(84) Benannte Vertragsstaaten:
**BE**

(56) Entgegenhaltungen:
**DE - A - 1 912 595**
**DE - A - 2 208 476**
**DE - A - 3 019 780**
**DE - B - 1 293 420**
**FR - A - 2 282 231**
**US - A - 3 576 047**

(73) Patentinhaber: **NORDISCHER MASCHINENBAU RUD. BAADER GMBH + CO KG, Geniner Strasse 249, D-2400 Lübeck (DE)**

(72) Erfinder: **SCHMIDT, Hans-Joachim, D-4558 Bersenbrück (DE)**

(74) Vertreter: **Weydert, Robert et al, OFFICE DENNEMEYER S.à.r.l. P.O. Box 1502, L-1015 Luxembourg (LU)**

## Beschreibung

Die Erfindung betrifft ein Verfahren zum maschinellen Gewinnen des Schwanzmuskelfleisches von gekochten Garnelen (crangon vulgaris) durch Entfernen des dieses umschliessenden Schwanzpanzers, wobei die Garnelen einzeln und in einheitlicher Lage zugeführt und entkrümmt werden, und der Schwanzpanzer nach Deformation mindestens des Schwanzteiles desselben entfernt wird, sowie eine Vorrichtung zur Durchführung des Verfahrens mit einer die Garnelen einzeln und in einheitlicher Lage bereitstellenden Zuführeinrichtung und einer Einrichtung zum Entfernen des Schwanzpanzers.

Es ist bereits vielfach versucht worden, Garnelen, sogenannte Nordsee-Garnelen (Crangon vulgaris) durch Maschinen von den harten Panzerteilen zu befreien und das für den Verzehr geeignete zarte Fleisch des Garnelen-Schwanzes freizulegen.

So ist beispielsweise aus dem DE-GM 7203058 eine Vorrichtung bekannt, bei welcher die Panzerteile mit feinen Messern aufgeschnitten werden und das Fleisch mit Druckwasser ausgespült wird. Abgesehen von mangelnder Funktionsfähigkeit hat eine solche Schälweise auch den Nachteil, dass der Geschmack des gewonnenen Krabbenfleisches vom Spülwasser nachteilig beeinflusst wird.

Wie aus der DE-PS 2642315 ersichtlich, ist auch schon versucht worden, die Wirkung des Druckwassers durch scharf gebündelte Luftstrahlen zu ersetzen, um das Krabbenfleisch aus den geöffneten Panzern herauszulösen. Dabei hat sich herausgestellt, dass sämtliche am eigentlichen Schälvorgang beteiligten Bauelemente solcher Schälmaschinen äusserst stark verschmutzen. Das den Garnelen eigene Körperfett haftet zusammen mit abgesplitterten Panzerteilchen, Fühlern, Beinteilchen usw. in kürzester Zeit an den Elementen einer Schälvorrichtung und macht diese unbrauchbar. Die eingesetzten scharf gebündelten Luftstrahlen haben dabei noch den Nachteil, dass sie das Garnelenfett und sonstige beim Schälvorgang anfallende Schmutzteilchen, wie z.B. auch die bei vielen Garnelen an der Bauchunterseite sitzenden Eier, förmlich auf die den Schälbereich umgebenden Teile der Vorrichtung aufschiessen.

Diesem Mangel sollte das Konzept nach der DE-OS 2852701 abhelfen, bei welchem das Garnelenfleisch aus den Panzerteilen herausgesaugt werden sollte. Diese Vorgehensweise ist jedoch auch daran gescheitert, dass durch die Verschmutzung nach kurzer Zeit ein Absaugen nicht mehr möglich war, weil Saugleitungen und Saugdüsen durch fettige Krusten verstopften.

Die Überlegungen gingen daher auf ein Schälverfahren, bei welchem das Fleisch auf rein mechanischem Wege gewonnen werden sollte. Ein solches Verfahren ist in der DE-PS 1912595 offenbart. Nach diesem Verfahren wird die Schale der entkrümmten Garnele in einem mittleren Bereich zwischen zwei Schalenringen aufgeschnitten und damit in einen Körper- und Schwanzteil unterteilt und gleichzeitig der Kopf abgeschnitten. Anschliessend wird das Schwanzmuskelfleisch teilweise aus den beiden, von dem Körperteil mit umfassten abgetrennten Schalenringen von der Köpfschnittfläche her teilweise in Richtung auf den Schwanzteil ausgeschoben, der Schwanzteil gewalkt, die Schale an diesem Teil abgezogen und schliesslich das Schwanzmuskelfleisch aus dem Körperteil wiederum von der Köpfschnittfläche her vollständig ausgeschoben. Bei Anwendung dieses Verfahrens hat sich jedoch gezeigt, dass die bei der Handschälung gewohnte Ausbeute an Garnelenfleisch nicht erreichbar ist. Das hat seine Ursache darin, dass sonst auch Fleischteile aus dem Kopfbereich gewonnen werden, die beim Abschneiden des Kopfes gemäss dem bekannten Verfahren mit abgeschnitten werden, d.h. verloren gehen. Ein weiterer Nachteil des bekannten Verfahrens liegt darin, dass das derart gewonnene Produkt sich von dem handgeschälten deutlich unterscheidet und daher als nicht in traditioneller Handarbeit gewonnen erkennbar ist.

Schliesslich wurden noch, wie aus der US-PS 3576047 ersichtlich, andere Wege beschritten, um eine Mechanisierung des Schälprozesses zu erreichen. So offenbart die genannte Schrift eine Vorrichtung, bei welcher die Masse der Garnelen in eine Vielzahl von Einzelbahnen verteilt wird, in denen sie vereinzelt und ausgerichtet am Ende derselben befindlichen Pressscheiben zugeführt werden, zwischen denen die Panzerteile von dem Fleisch durch Deformation abgelöst werden. Nachteilig bei dieser Vorgehensweise ist, dass Fleisch und Panzerteile ein Gemich bilden, aus dem das Fleisch entnommen werden muss. Das jedoch ist ein sehr schwieriges Unterfangen, da vielfach Fleisch und Schalenreste noch zusammenhängen.

Allen bekannten Vorrichtungen ist auch noch der Nachteil gemeinsam, dass die Garnelen während des Schälvorganges nicht mit der erforderlichen Präzision in den Arbeitsbereich der eigentlichen Schälwerkzeuge gebracht werden konnten, vor allen Dingen deshalb nicht, weil praktisch keine der anfallenden Garnelen einer anderen gleich ist.

Bisher bekannte Vorrichtungen zum Schälen von Garnelen sind aufgrund der Vielzahl von zu bewältigenden Problemen demzufolge nicht über ein Experimentierstadium hinausgekommen. Zwar konnten zu Beginn eines Einsatzes der bekannten Maschinen Garnelen im Prinzip geschält werden. Ein Dauereinsatz für eine gewerbliche Nutzung ist jedoch bisher von keiner der bekannten Vorrichtungen ermöglicht worden.

Es ist daher die Aufgabe der Erfindung, ein Schälverfahren anzugeben, mit welchem die beim Handschälen gewohnte Ausbeute an Garnelenfleisch erreichbar ist, wobei ein Produkt erzielbar ist, das sich auch hinsichtlich seiner Form von dem handgeschälten Produkt nicht unterscheidet. Es soll erreicht werden, dass Fleisch und Abfall nach dem Schälvorgang getrennt anfallen.

Diese Aufgabe wird erfindungsgemäss durch ein Verfahren gelöst, bei welchem jede Garnele an ihrem Kopfteil und mindestens dem ersten Schalenring des den Rumpf des Garnelenkörpers umschliessenden Schwanzpanzers gehalten und die
an diesem verbliebenen Schalenringe hindurch
abgezogen wird.

Zur Durchführung dieses Verfahrens ist eine
Vorrichtung mit einer die Garnelen einzeln und in
einheitlicher Lage bereitstellenden Zuführeinrichtung und einer Einrichtung zum Entfernen des
das Schwanzmuskelfleisch umschliessenden
Schwanzpanzers vorgesehen, welche folgende, in
Kombination wirksame Elemente aufweist: Ein erstes als Aufnehmer ausgebildetes Positionierelement, welches die bereitgestellte Garnele in den
Arbeitsbereich eines als Halteelement ausgebildeten Tastfühlers für die Tastung der Dicke der Garnele vorschiebt, ein zweites als Vorschieber ausgebildetes Positionierelement, welches die unter
dem Tastfühler befindliche Garnele um einen jeweils aus dessen Messergebnis festgelegten Weg
vorschiebt, einen Schwanzstrecker zum Entkrümmen des Garnelenschwanzes, eine den Garnelenschwanz klemmend erfassende Klemmzange und
eine das Schwanzmuskelfleisch entnehmende
Fleischzange.

Für eine korrekte Abwicklung des eigentlichen
Schälvorganges ist wichtige Voraussetzung, dass
die zu bearbeitenden Garnelen in Vorbereitung
des Schälvorganges richtig positioniert werden.
Dazu müssen jeder Garnelenkörper, vorzugsweise
der Kopf und die beiden ersten nachfolgenden
Körperringe des Panzers erfasst werden können,
wobei das Problem zu lösen ist, dass die Garnelen
unterschiedliche Abmessungen haben. Um das zu
erreichen, ist vorgesehen, dass der Tastfühler als
federbelasteter Hebel mit einem in die Bewegungsbahn des Vorschiebers vorstehenden
Hebelarm ausgebildet ist, und dass der Vorschieber einen an den Hebelarm anschlagenden Anschlag mit einer in den Schwenkweg des Hebelarmes vorschiebbaren geneigten, vorzugsweise
mit stufigen Absetzungen versehenen Flanke aufweist.

Der Positioniervorgang verläuft demnach so,
dass zunächst jede Garnele unter dem Tastfühler
vorpositioniert und dann unter Berücksichtigung
des Messergebnisses desselben nachpositioniert
wird, so dass die unter dem Tastfühler klemmend
gehaltene Garnele in eine Position gelangt, bei der
der Garnelenkörper um ein vorbestimmtes Mass
in den Arbeitsbereich der Halteelemente und Schälwerkzeuge vorsteht. Diese Vorgehensweise wird
ermöglicht, weil die Kopfdicke einer Garnele indirekt ein Parameter für die Grösse bzw. Länge einer
Garnele ist. Eine kleinere Garnele ist weiter über
die freie Kante des Warteabschnittes vorzuschieben als eine grössere Garnele, damit der abzuschälende Schwanzpanzer auch einwandfrei in
den Arbeitsbereich der eigentlichen Schälwerkzeuge der Vorrichtung gelangt. Über den die Grösse der Garnele ertastenden Tastfühler wird der
Vorschiebeweg des Vorschiebers der Positionierstation in einfacher Weise beeinflusst. Zum sicheren Festhalten der positionierten Garnele kann
eine Anordnung getroffen werden, welche darin besteht, dass eine dem Tastfühler in Arbeitsrichtung der Vorrichtung unmittelbar nachgeordnete,
taktweise betätigbare Klemme vorgesehen ist.
Diese Klemme tritt dabei in Funktion, sobald die
Garnele einwandfrei positioniert ist, jedoch bevor
die eigentlichen Schälwerkzeuge an der Garnele
angreifen. Mit Vorteil wird der vorbeschriebene
Tastfühler ebenfalls als Halteelement mitbenutzt.
Der Tastfühler erfüllt demnach zwei Funktionen,
nämlich die eines Halteelementes und die eines
den Vorschieber beeinflussenden Elements.

Gemäss einer vorteilhaften Weiterbildung ist
vorgesehen, dass dem Tastfühler, der Klemme,
der Fleischzange und der Klemmzange Mittel zum
Auswerfen der von ihnen jeweils gehaltenen Garnelenbestandteile zugeordnet sind.

Als Mittel zum Auswerfen können zum Beispiel
gebündelte Luftstrahlen mit Vorteil vorgesehen
sein. Die Schäleinrichtung kann zur Erzeugung
solcher gebündelter Luftstrahlen mit einfachen
Düsen vorgesehen sein, denen über Schläuche
ein kräftiger Luftstoss bei Bedarf zugeführt wird.
Sobald sich die Halteelemente, die Fleischzange
und die Klemmzange geöffnet haben, blasen die
Düsen mit den Luftstrahlen die gehaltenen Garnelenteile förmlich aus diesen Bauteilen heraus.

Zur Verbesserung der Auswerferwirkung können auch zusätzliche Abstreifer vorgesehen sein.
Zweckmässigerweise kann insbesondere die
Klemmzange mit einem solchen Abstreifer versehen sein, weil der Schwanzpanzer zwischen ihren
Backen doch erheblichen Quetschungen unterworfen ist, die dazu führen können, dass ein
Schwanzpanzer durch anhaftendes Garnelenfett
oder dergleichen klebrige Bestandteile allein
durch einen Luftstrahl nicht einwandfrei von den
Backen abzulösen ist.

Eine andere vorteilhafte Weiterbildung sieht
vor, dass die der Klemmzange und den Halteelementen zugeordneten Luftstrahlen in die gleiche
Richtung ausgerichtet sind und dass die Richtung
des der Fleischzange zugeordneten Luftstrahls etwa quer dazu ausgerichtet ist.

Diese Massnahme hat den Vorteil, dass abgeblasene Panzerteile in eine andere Richtung geworfen werden als das zu gewinnende Garnelenfleisch. Am Ende der Abwurfbahn der Garnelenteile können entsprechende Behälter für als Abfall
anzusehende Panzerteile sowie das zu gewinnende Garnelenfleisch auf einfachste Weise aufgestellt werden.

Die Betätigung und Steuerung aller Funktionselemente erfolgt vorteilhafterweise mittels eines
zentralen Antriebes, welcher mindestens eine umlaufend angetriebene Nockenwelle mit den einzelnen Funktionselementen zugeordneten und diese
über mechanische Gestänge bewegenden Steuernocken umfasst. Der Vorteil dieser Anordnung
besteht insbesondere in ihrer Betriebssicherheit
sowie darin, dass die Verbindungs- und Gelenkpunkte auf einfachste Weise mit wenigen Handgriffen und Werkzeugen gegebenenfalls vom Bedienungspersonal nachgestellt werden können,
wenn Funktionsstörungen auftreten sollten. Eine
einmal eingestellte Vorrichtung zum Schälen von Garnelen ist jedoch gegen Störungen kaum noch anfällig, vor allen Dingen deshalb nicht, weil nur geringe Massen durch die Gestänge zu bewegen sind. Auch die aufzubringenden Kräfte sind wegen der Handhabung der doch recht kleinen Garnelen mit optimaler Präzision zu steuern und zu beherrschen.

In weiterer Ausgestaltung ist vorgesehen, dass die Zuführeinrichtung ein Vereinzelungsmagazin mit einem topfförmigen Schwingförderer und eine zu der Einrichtung zum Entfernen des Schwanzpanzers führende Transportrinne umfasst. Ein Schwingförderer bietet den Vorteil, dass seine Fördergeschwindigkeit durch Veränderung der Schwingungsfrequenz auf einfachste Weise regelbar ist. In das Vereinzelungsmagazin des Schwingförderers können zu schälende Garnelen in vorteilhafter Weise lose geschüttet werden. Das Vereinzelungsmagazin ist in an sich bekannter Weise als schwingender Topf ausgebildet, dessen Wand eine ansteigende Wendelstufe hat, auf der, bedingt durch die Vibration, die Garnelen nur vereinzelt, d.h. nacheinander, herausbefördert werden und auf die Transportrinne gelangen, von der sie der eigentlichen Schäleinrichtung zugeführt werden. Die hintereinander einzeln aus dem Vereinzelungsmagazin des Schwingförderers herausgeführten Garnelen sind auf ihrem Weg zur Schäleinrichtung jedoch noch weiteren Behandlungen zu unterwerfen. Denn es ist erforderlich, dass jede einzelne Garnele ihre vorbestimmte Position gegenüber der Schäleinrichtung auch in einheitlicher Ausrichtung erreicht. Zu diesem Zweck ist nach einer anderen Weiterbildung vorgesehen, dass die Transportrinne eine Ausricht- und Wendestation und eine Kontrollstation umfasst, welche ein Mittel zum Auswerfen nicht einwandfrei ausgerichteter Garnelen aufweist. Durch die Ausrichtstation und die Wendestation wird jede Garnele ihrem Weg entlang der Transportrinne zur Schäleinrichtung in eine vorbestimmte Lage ausgerichtet und gegebenenfalls gewendet. Die Ausrichtung erfolgt dabei in bekannter Weise durch einen gegen die auf der Transportrinne liegend fortbewegten Garnelen gerichteten Luftstrom, was bewirkt, dass eine Garnele, die in dessen Bereich gerät und dabei auf der Transportrinne so liegt, dass der Kopf mit Fühlern sowie der Garnelenschwanz zum Luftstrom zugekehrt ist, durch den Luftstrom gedreht wird und sich auf der Transportrinne stets so ausrichtet, dass der gekrümmte Rücken mit dem geringsten Strömungswiderstand dem Luftstrom zugekehrt ist. Haben die auf der Transportrinne zur Schäleinrichtung geführten Garnelen eine solche ausgerichtete Lage angenommen, können sie dabei noch so liegen, dass der an der Unterseite des Kopfes durch die Krümmung anliegende Garnelenschwanz entweder zum linken oder zum rechten Rand der Transportrinne benachbart liegt. Der diesbezüglich einheitlichen Ausrichtung dient die Wendestation, die sich die an sich nicht neue Erkenntnis zunutze macht, dass der Schwerpunkt jeder Garnele innerhalb des Garnelenkörpers in der Nähe des relativ dicken Garnelenkopfes liegt. Die Garnele hat deshalb das Bestreben, auf ihrem Weg entlang der Transportrinne mit dem Schwerpunkt im tiefsten Bereich der Transportrinne zu liegen. Ist die Transportrinne z.B. leicht muldenförmig gekrümmt, wird der Kopf der Garnele stets zum tiefsten Punkt der im Querschnitt muldenförmigen Transportrinne gleiten. Wird der Rand der Transportrinne, zu welcher der Garnelenschwanz nicht hinweisen soll, zunehmend schärfer gekrümmt und als zunehmend steiler ansteigende Auflaufflanke ausgebildet, so wird erreicht, dass der leichtere Garnelenschwanz angehoben wird und letztlich ein Wenden der Garnele erfolgt, indem ihr Schwanz bei stets an der tiefsten Stelle der Transportrinne weiterlaufendem Garnelenkopf durch die Auflaufflanke angehoben wird und schliesslich die Garnele zur anderen Randseite der Transportrinne kippt. Der Ausrichtvorgang verläuft jedoch nicht absolut sicher, so dass der Kontrollstation die Aufgabe zufällt, zu verhindern, dass der Schäleinrichtung Garnelen zugeführt werden, die ihre vorbestimmte Lage auch nach dem Durchlauf durch die Ausrichtstation und die Wendestation der Transportrinne nicht eingenommen haben. Eine solche sortierende Kontrollstation kann z.B. mehrere Lichtschranken aufweisen, die eine auf der Transportrinne geführte Garnele passieren muss. Diese Lichtschranken können zueinander in einer solchen gegenseitigen Anordnung stehen, dass bei einer einwandfrei ausgerichteten Garnele alle parallel zueinander arbeitenden Lichtschranken gleichzeitig abgedeckt sind. Ist nur eine der Lichtschranken nicht abgedeckt, registriert die Kontrollstation, dass hier eine nicht wie vorbestimmt ausgerichtete Garnele durchläuft, und es kann durch das Mittel zum Auswerfen eine Aussortierung dieser fehlerhaft ausgerichteten Garnele erfolgen. Zum Beispiel kann als Mittel zum Auswerfen ein scharf gebündelter Luftstrahl auf die fehlerhaft ausgerichtete Garnele gerichtet werden, durch den eine solche Garnele von der Transportrinne heruntergeblasen wird.

Jede Vorrichtung ist in ihren Abmessungen in vorteilhafter Weise gering dimensionierbar, so dass ohne weiteres zur Steigerung der Schälleistung auch mehrere Vorrichtungen nebeneinander parallel arbeiten können, wobei deren Aufstellung auf engstem Raum möglich ist.

Die lose anfallenden Garnelen können vom Bedienungspersonal in grosser Menge in das Vereinzelungsmagazin jeder Vorrichtung geschüttet werden und laufen dann nach Vereinzelung durch die einzelnen Stationen der Vorrichtung bis zur vollständigen Schälung durch die Schäleinrichtung. Dabei kann eine Selbstüberwachung der Zuführeinrichtung vorgesehen sein, die unabhängig von der Schäleinrichtung arbeitet. Dadurch wird vermieden, dass der Schäleinrichtung die Garnelen schneller zugeführt werden als diese geschält werden können. Es ist damit eine genaue Einstellung der Frequenz der vibrierenden Zuführeinrichtung innerhalb gewisser Toleranzgrössen nicht mehr notwendig. Diese Selbstüberwachung kann zum Beispiel durch eine Lichtschranke im Bereich der Positionierelemente erfolgen. Zweckmässigerweise wird jedoch statt einer Lichtschranke eine Luftschranke eingesetzt, weil Fotozellen einer Lichtschranke leicht verschmutzen können. Die Luftschranke registriert, wenn eine zu schälende Garnele in Warteposition ist. In diesem Moment wird das die Vibration der Zuführeinrichtung erzeugende Gerät abgeschaltet und somit weiterer Nachschub von Garnelen gestoppt, bis die Warteposition geräumt ist.

Ein Ausführungsbeispiel der Erfindung, aus dem sich weitere erfinderische Merkmale ergeben, ist in der Zeichnung dargestellt. Es zeigen

Fig. 1 eine schematische Draufsicht auf die gesamte Vorrichtung zum Schälen von Garnelen mit Zuführeinrichtung und Schäleinrichtung sowie Transportrinne.

Fig. 2 eine schematische perspektivische Ansicht der Ausrichtstation der Transportrinne der Zuführeinrichtung.

Fig. 3 eine schematische perspektivische Ansicht der Wendestation der Transportrinne der Zuführeinrichtung,

Fig. 4 eine schematische perspektivische Ansicht der kompletten Schäleinrichtung,

Fig. 5 eine schematische perspektivische Ansicht des in die Positionierstation einlaufenden Warteabschnittes der Transportrinne als Einzelheit der Schäleinrichtung gemäss Fig. 4,

Fig. 6 in schematischer Darstellung die Funktion des Tastfühlers der Schäleinrichtung gemäss Fig. 4 in verschiedenen Betriebsstellungen entsprechend den Figurenbezeichnungen a, b und c und

Fig. 7 eine schematische Draufsicht auf eine Einzelheit der Schäleinrichtung gemäss Fig. 4 zur Verdeutlichung der Funktion von Positionierelementen, Halteelementen und Schwanzstrecker.

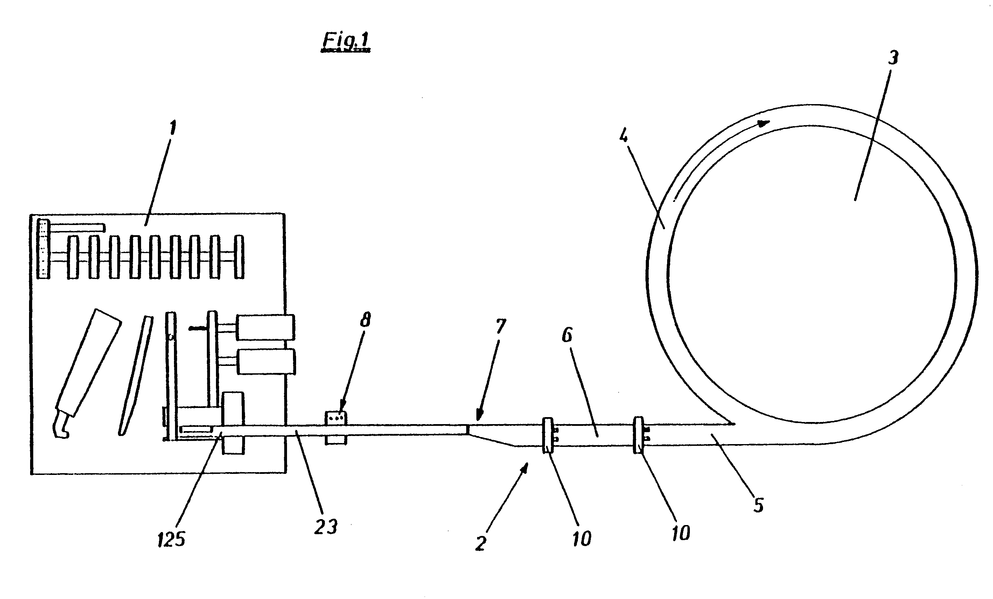

In Figur 1 ist die Vorrichtung zum Schälen von Garnelen schematisch in der Draufsicht dargestellt. Die erfindungsgemässe Vorrichtung besteht aus den beiden Baugruppen der Schäleinrichtung 1 und der Zuführeinrichtung 2. Die Zuführeinrichtung ist als Schwingförderer ausgebildet, der ein topfförmiges Vereinzelungsmagazin 3 aufweist, in welches zu schälende Garnelen lose geschüttet werden können. Am äusseren Umfang weist das Vereinzelungsmagazin eine vom Boden aus allmählich schraubenförmig ansteigende Wendelstufe 4 auf, die so breit ist, dass Garnelen nur hintereinander die Wendelstufe einzeln aufwärts gefördert werden können. Die Förderbewegung wird dadurch erzeugt, dass die gesamte Zuführeinrichtung mit Vibrationen entsprechender Frequenz beaufschlagt wird. Die in Pfeilrichtung aus dem Vereinzelungsmagazin einzeln abgezogenen Garnelen wandern auf ihrem durch die Vibrationen bedingten Weg aus dem Vereinzelungsmagazin heraus und gelangen auf die zur Schäleinrichtung 1 führende Transportrinne 5. Auf ihrem Weg entlang der Transportrinne passieren die zu schälenden Garnelen den Bereich einer Ausrichtstation 6 sowie nachfolgend eine Wendestation 7.

Mit 8 ist eine Kontrollstation bezeichnet, welche Mittel zum Auswerfen nicht einwandfrei ausgerichteter Garnelen aufweist.

Die einzelnen Bauelemente der Schäleinrichtung werden nachfolgend näher beschrieben.

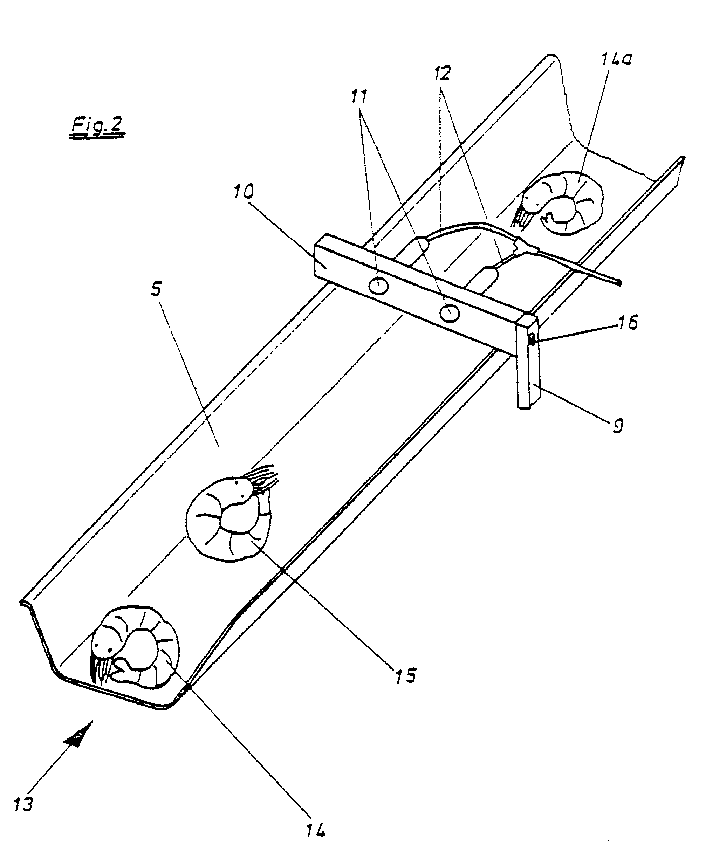

Zunächst ist in Fig. 2 ein Ausschnitt der Transportrinne 5 im Bereich der Ausrichtstation 6 in vergrössertem Massstab dargestellt. Mittels eines Haltesteges 9 ist über der Transportrinne ein Trägerteil 10 gehalten, in das nebeneinanderliegend zwei Luftdüsen 11 eingelassen sind. An die Luftdüsen sind, wie bei diesem Ausführungsbeispiel schematisch angedeutet, zu einem Kompressor führende Druckluftschläuche 12 angeschlossen. Aus den Luftdüsen 11 austretende, scharf gebündelte Luftströme sind gegen die in Richtung des Pfeiles 13 auf der Transportrinne 5 zugeführten Garnelen 14, 14a und 15 blasbar, wobei der Anströmwinkel zur Transportrinne 5 durch Verdrehung des Trägerteils 10 einstellbar ist, indem die Verbindungsschraube 16 des Trägerteils mit dem Haltesteg 9 entsprechend gelöst und nach Verstellung des Anströmwinkels wieder angezogen wird.

Wie aus Fig. 1 entnehmbar ist, weist die Ausrichtstation 6 zwei hintereinanderliegende Trägerteile 10 mit entsprechenden Luftdüsen 11 auf, durch welche vom Vereinzelungsmagazin 3 über die Transportrinne 5 zugeführte Garnelen ausgerichtet werden. Diese Ausrichtung erfolgt wie nachstehend angegeben:

Die in Fig. 2 mit 14, 14a und 15 bezeichneten Garnelen wandern in Richtung des Pfeiles 13 auf der Transportrinne 5 durch die Ausrichtstation gegen die aus den Luftdüsen 11 austretenden Luftströmungen. Die Garnelen 14, 14a kehren den Luftströmungen dabei ihre gekrümmte Rückenseite zu und bieten den Luftströmungen somit den geringsten Strömungswiderstand.

Dagegen kehrt die Garnele 15 den Luftströmungen ihren Kopf- und Schwanzabschnitt zu. Der Strömungswiderstand einer derart liegenden Garnele ist unter Umständen so hoch, dass die Vorschubkraft der Transportrinne nicht ausreicht, die derart liegende Garnele entgegen der Luftströmung zu bewegen. Die im Kopfbereich der Garnele 15 abstehenden Fühler bieten eine grössere Angriffsfläche, so dass sich die Garnele letztlich auf der Transportrinne durch den Angriff der strömenden Luft drehen wird, bis sie der Luftströmung ebenfalls ihre strömungsgünstigere gekrümmte Rückenfläche zukehrt. Alle auf der Transportrinne 5 in Richtung zur Schäleinrichtung weitergeführten Garnelen, welche die Ausrichtstation durchlaufen haben, weisen deshalb mit ihrem gekrümmten Rücken zur Schäleinrichtung.

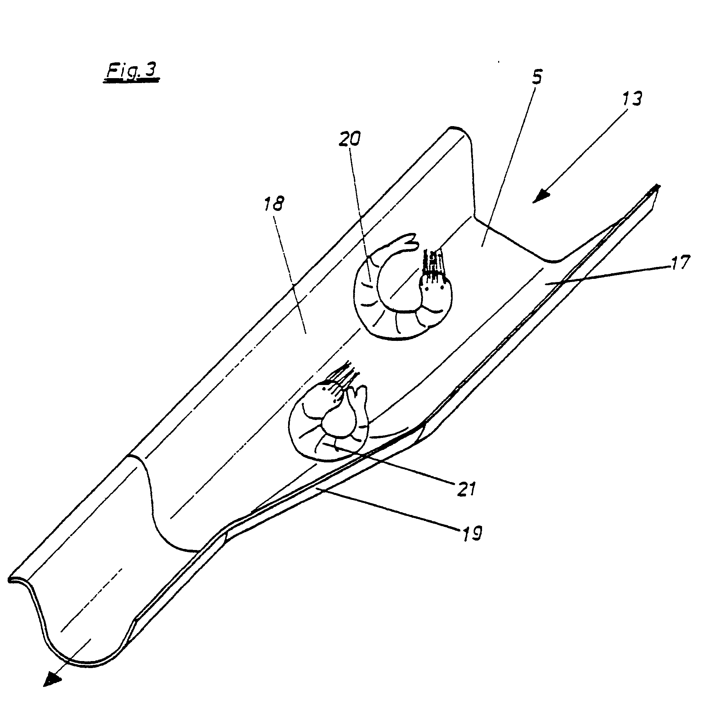

In Fig. 3 ist eine schematisch perspektivische Darstellung desjenigen Abschnittes der Transportrinne 5 dargestellt, welcher als Wendestation ausgebildet ist, die in Fig. 1 mit 7 bezeichnet ist. Die Transportrinne ist im Querschnitt muldenförmig geformt, und die Seitenfläche 17 der beiden, die Transportrinne begrenzenden Seitenflächen 17 und 18 ist, wie dargestellt, zu einer zunehmend schärfer gekrümmten und zunehmend steiler ansteigenden Auflaufflanke 19 ausgeformt. Die in die Wendestation 7 einlaufenden Garnelen bewegen sich in Richtung des wiederum mit 13 bezeichneten Pfeils. Die mit 20 bezeichnete Garnele liegt derart auf der Transportrinne 5, dass der Garnelenschwanz auf der Seitenfläche 18 der Transportrinne geführt ist. Diese Lage wird die Garnele 20 während ihres weiteren Wegs entlang der Transportrinne auch beibehalten, weil ihr Schwerpunkt in der Nähe des abmessungsmässig grössten und dadurch schwersten Körperteils, nämlich des Garnelenkopfes, liegt und dieser somit das Bestreben hat, die tiefste Lage in der muldenförmigen Transportrinne 5 einzunehmen.

Das gleiche gilt auch für die vorlaufende Garnele 21, deren Kopf ebenfalls die tiefste Lage in der muldenförmigen Transportrinne 5 eingenommen hat. Der Schwanz dieser Garnele 21 liegt jedoch auf der Seitenfläche 17 der Transportrinne und wird durch die schärfer gekrümmte und zunehmend steiler ansteigende Auflaufflanke 19 ständig angehoben. Der Kopf der Garnele bleibt dabei weiterhin am tiefsten Punkt der Transportrinne. Schliesslich wird die Garnele 21 nach entsprechender Anhebung durch die Auflaufflanke 19 umkippen, so dass ihr Schwanz letztlich, bei weiterem Transport auf der Transportrinne 5, ebenfalls auf der Seitenfläche 18 liegt.

Alle Garnelen, welche die Wendestation mit der Auflaufflanke 19 durchlaufen haben, werden somit in Bewegungsrichtung entlang der Transportbahn mit ihrem gekrümmten Rückenteil voran bewegt und dabei mit ihren Schwanzteilen auf der Seite der Seitenfläche 18 liegen.

Wie bei der Beschreibung der Fig. 1 erwähnt, durchlaufen die die Wendestation passierenden Garnelen nachfolgend eine Kontrollstation 8, wo die vorbeschriebene Lage der sich entlang der Transportrinne 5 bewegenden Garnelen kontrolliert wird. Nicht in vorbestimmter Lage befindliche Garnelen werden durch Mittel von der Transportbahn abgeworfen, welche von der Kontrollstation 8 gesteuert werden.

Die Kontrollstation kann z.B. drei, in bestimmter Anordnung zueinander in der Transportrinne befindliche Lichtschranken umfassen. Die drei Lichtschranken werden dann unterbrochen, wenn die Garnele die vorbestimmte Lage eingenommen hat. Eine nicht in vorbestimmter Lage durchlaufende Garnele wird beispielsweise nur zwei der drei Lichtschranken unterbrechen, und über eine entsprechende elektrische Steuerung kann ein Auswerfen einer solchen, nicht einwandfrei ausgerichteten Garnele aus der Transportrinne heraus erfolgen. Als Mittel zum Auswerfen kann z.B. ein scharf gebündelter Luftstrahl eingesetzt werden.

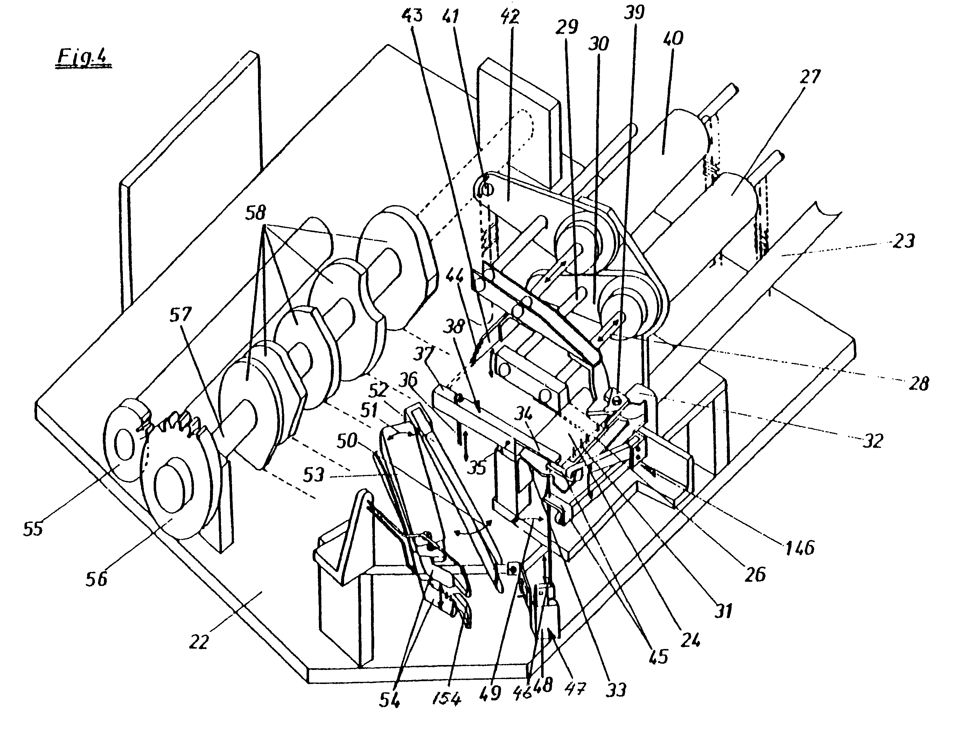

In Fig. 4 ist die Schäleinrichtung 1 in schematischer perspektivischer Ansicht von oben dargestellt.

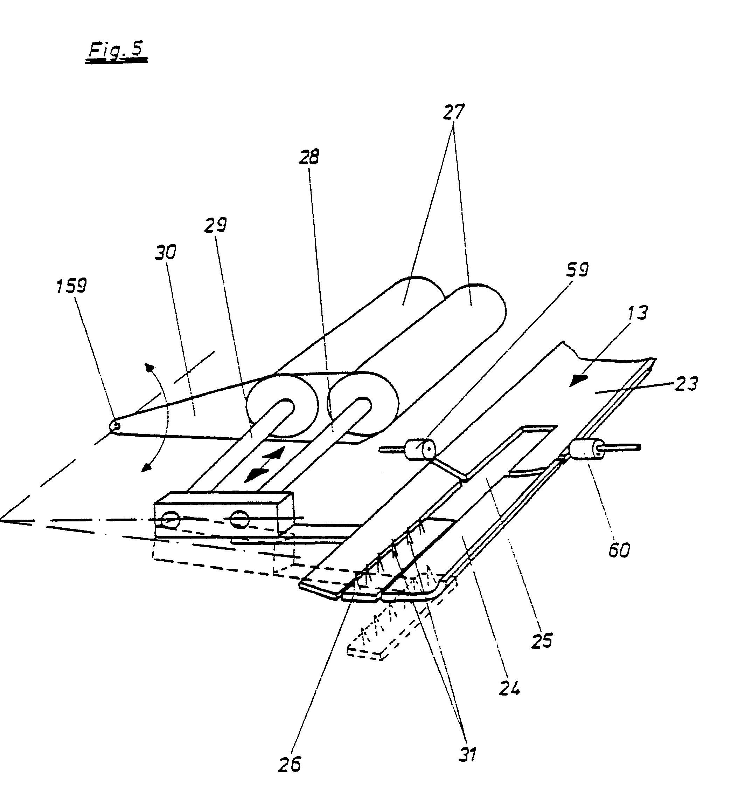

Alle Bauteile der Schäleinrichtung 1 sind auf einer Grundplatte 22 angeordnet, die mit der Zuführeinrichtung möglichst nicht starr verbunden sein darf, weil sich die der Zuführeinrichtung mitgeteilten Vibrationen unter Umständen störend auf die Funktion der Schäleinrichtung auswirken können. Ein in die Schäleinrichtung führender letzter Abschnitt der Transportrinne 5 ist ein sogenannter Warteabschnitt 23 (siehe auch Fig. 1). An diesen Warteabschnitt schliesst sich ein Endbereich 24 an, der bis in eine Positionierstation 125 (Fig. 1) führt. In dieser Positonierstation werden Garnelen einzeln vom Warteabschnitt 23 abgenommen und in eine vorbestimmte Position gebracht, bei der sie von Halteelementen und Schälwerkzeugen der Schäleinrichtung weiter bearbeitet werden können. Der in die Positionierstation hineinführende Endbereich 24 des Warteabschnitts 23 der Transportrinne ist mit einem Längsschlitz 25 (Fig. 5) versehen, in dem ein Aufnehmer 26 hin- und herschiebbar ist. Der Aufnehmer ist ausserdem aus dem Längsschlitz heraus nach unten absenkbar oder von unten in den Längsschlitz hinein hebbar. Die Bewegungen des Aufnehmers 26 erfolgen über die in Führungshülsen 27 geführten Führungsstangen 28 und 29. Die Führungshülsen 27 sind an einer Traverse 30 gehalten, die um eine Achse schwenkbar ist. Auf diese Einzelheit wird bei der Beschreibung der Fig. 5 noch näher eingegangen.

Der Aufnehmer 26 ist mit in eine zugeführte Garnele eindringenden Nadeln 31 besetzt. Im Übergangsbereich zwischen Warteabschnitt 23 und Endbereich 24 der Positionierstation befindet sich ein die Garnelen von oben abstützender Niederhalter 32, der die Garnele abstützt, wenn durch Hochheben des Aufnehmers 26 seine Nadeln 31 in die Garnele gedrückt werden. Die von den Nadeln erfasste Garnele wird bei Längsverschiebung des Aufnehmers 26 im Längsschlitz 25 soweit verschoben, dass der gekrümmte Rücken der Garnele über die freie Kante 33 des Endbereiches 24 des Warteabschnitts 23 der Transportrinne 5 hinaus vorsteht. Auf den von den Nadeln gehaltenen Kopf der Garnele senkt sich ein Abschnitt 34 eines um den Lagerpunkt 35 schwenkbar gelagerten Tastfühlers 38, der mit Hilfe einer lotrecht heb- und senkbaren Riegelstange 36 verschwenkt werden kann. Die Riegelstange greift am Hebelarm 37 des somit aus Abschnitt 34 und Hebelarm 37 gebildeten doppelarmigen Tastfühlers 38 an.

Ein Vorschieber ist mit 39 bezeichnet. Dieser Vorschieber ist ebenfalls über Führungsstangen und eine Führungshülse 40 parallel zum Längsschlitz 25 im Endbereich 24 der Positionierstation beweglich sowie in seiner Arbeitsposition schwenkbar, indem er um den Lagerpunkt 41 mit der seine Führungshülse 40 tragenden Traverse 42 geschwenkt wird. Mit 43 ist ein dem Vorschieber 39 zugeordneter Anschlag bezeichnet, der eine in den Schwenkweg des Hebelarms 37 des Tastfühlers 38 vorschiebbare geneigte Flanke mit stufigen Absetzungen 44 hat.

Der Abschnitt 34 des Tastfühlers 38 erfüllt ebenfalls die Funktion eines Halteelementes, und zwar dadurch, dass seine von einer Feder bewirkte Anpresskraft gegenüber dem zu haltenden Körperteil einer Garnele durch weiteres Anheben der Riegelstange 36 fest arretiert wird, sobald der Vorschieber 39 die zu schälende Garnele in die ihrer Grösse entsprechende Position vorgeschoben hat, was wiederum durch die stufigen Absetzungen 44 am Anschlag 43 bewirkt wird, die gegen den Hebelarm 37 des Tastfühlers 38 anschlagen, wenn der Vorschieber 39 durch Ausschieben seiner Führungsstangen aus den Führungshülsen 40 vorgeschoben wird.

Ein weiteres Halteelement ist die mit zwei nadelbewehrten Backen 45 ausgerüstete Klemme 146, die sich taktweise öffnen und schliessen lässt. Zwischen den Klemmbacken 45 wird der über die freie Kante 33 des Endbereiches 24 vorstehende Kopfbereich der zu schälenden Garnele während des Schälvorganges festgehalten.

Der Schälvorgang wird dadurch eingeleitet, dass ein Dorn 46 eines Schwanzstreckers 47 in die vom gekrümmten Garnelenschwanz umschlossene Lücke vorstösst, indem er von unten nach oben gehoben wird. Ein den Dorn tragendes Tragorgan 48 ist auf einer kreisbogenförmigen Bahn in Richtung des Doppelpfeils 49 beweglich geführt, so dass der gekrümmte Schwanz der Garnele gestreckt wird.

Die Schälwerkzeuge der Schäleinrichtung umfassen die in Richtung des Kreisbogenpfeils 50 schwenkbare Fleischzange 51 sowie eine in Richtung des Kreisbogenpfeils 52 hin- und herschwenkbare Klemmzange 53, zwischen deren Backen 54 der gestreckte Garnelenschwanz zu liegen kommt, wenn die Klemmzange in Richtung der Positionierstation nach vorn aus ihrer dargestellten Stellung geschwenkt wird. Sobald sich die Backen 54 schliessen, wird der Schwanz der Garnele ergriffen und auch gequetscht, wodurch sich das am Ende des Schwanzes der Garnele festwachsene Fleisch vom Panzer löst. Schwenkt die Klemmzange bei weiter zugehaltenen Backen 54 wieder in die dargestellte Stellung zurück, wird der Schwanzpanzer vom zwischen den Halteelementen, insbesondere den Backen 54 der Klemme 146 gehaltenen Kopfpanzerteil, abgerissen, und das Garnelenfleisch liegt freizugänglich für die Fleischzange 51. Diese kann in die bei diesem Ausführungsbeispiel dargestellte Position zurückschwenken und dabei das Garnelenfleisch vom Kopfpanzer abziehen.

Danach öffnen sich die Halteelemente, die Fleischzange und die Klemmzange, so dass Panzerteile und Garnelenfleisch ausgestossen werden.

Der Vorgang wiederholt sich, wobei alle beweglichen Teile der Schäleinrichtung, taktweise gesteuert in aufeinanderabgestimmten Bewegungen, die ihnen zugeordneten Funktionen erfüllen.

Die taktweise Steuerung aller beweglichen Bauteile wird bei der erfindungsgemässen Vorrichtung über ein mechanisches Gestänge erzeugt, welches nicht weiter dargestellt ist. Dargestellt ist lediglich die für die Bewegung der Gestänge vorgesehene, über Ritzel 55 und 56 mittels eines nicht weiter dargestellten Elektromotors angetriebene Nockenwelle 57 mit entsprechend geformten Steuernocken 58.

In Fig. 5 ist eine Einzelheit der Positionierstation in vergrössertem Massstab schematisch in der Perspektive dargestellt. Garnelen laufen in Richtung des Pfeiles 13 bis zum Ende des Warteabschnittes 23 der Transportrinne 5. Im Übergangsbereich zwischen Warteabschnitt 23 und durch die Positionierstation führendem Endbereich 24 ist eine Luftschranke mit Luftmessdüsen 59 und 60 angeordnet. Hat eine Garnele die Luftschranke erreicht, wird die Vibration der Zuführeinrichtung abgestellt, so dass weiterer Vorschub von Garnelen gestoppt ist. Der Längsschlitz 25 des Endbereiches 24 ist bis in den Warteabschnitt 23 hinein verlängert, wie es hier dargestellt ist. Aus dieser Darstellung ist ebenfalls ersichtlich, wie der Aufnehmer 26, der als mit Nadeln 31 besetzte Platte ausgebildet ist, durch Verschwenkung der die Führungshülsen 27 tragenden Traverse 30 um den Gelenkpunkt 159 heb- und senkbar ist, wobei die abgesenkte Stellung durch gestrichelte Linien dargestellt ist. Weiterhin kann der Aufnehmer im Längsschlitz 25 durch Ein- und Ausschieben der Führungsstangen 28 und 29 in den Führungshülsen 27 hin- und hergefahren werden.

Der in die durch gestrichelte Linie dargestellte Stellung abgesenkte Aufnehmer wird durch Einfahren der Führungsstangen 28, 29 soweit zurückverfahren, bis das in den Warteabschnitt 23 hineinreichende Ende des Längsschlitzes 25 erreicht ist.

Danach hebt sich der Aufnehmer durch Verschwenken um den Gelenkpunkt 159, bis die Nadeln 31 in den über dem Längsschlitz im Warteabschnitt 23 liegenden Garnelenkörper eindringen. Nachfolgend wird seine Ausschiebebewegung der Führungsstangen 28 und 29 über Steuernocken 58 bewirkt, wodurch die auf den Nadeln aufgespiesste Garnele in die Positionierstation eingeführt wird. Dieses Vorschieben erfolgt soweit, bis der Kopfbereich der Garnele unter dem Abschnitt 34 des Tastfühlers 38 liegt, der sich anschliessend durch Steuerung mit dem entsprechenden Steuernocken absenkt und federnd auf den Garnelenkörper auflegt.

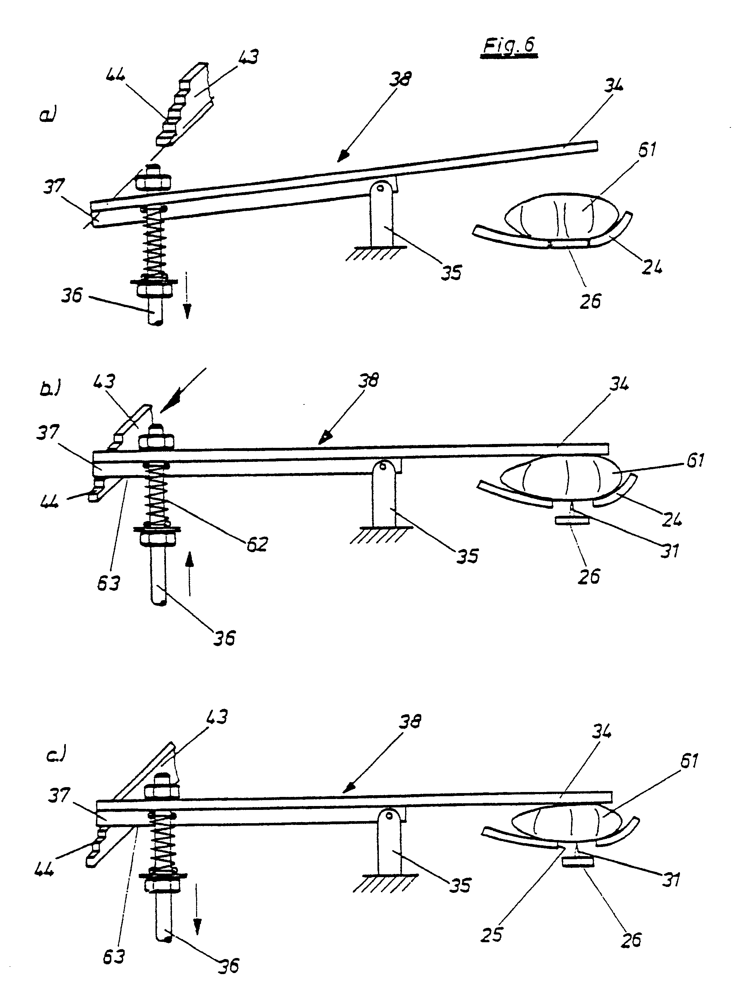

Die Funktionsweise des Tastkörpers ist in Fig. 6 mit den verschiedenen Schwenkstellungen gemäss Fig. a, b und c der Fig. 6 schematisch dargestellt. Gleiche Bauteile sind mit gleichen Bezugszahlen bezeichnet. In Figur 6a ist der Tastfühler 38 in einer Schwenkstellung dargestellt, bei der sich sein Abschnitt 34 in gehobener Stellung befindet. Somit kann eine mit 61 bezeichnete Garnele, in die die Nadeln 31 des Aufnehmers 26 eingedrungen sind, auf dem Endbereich 24 vorgeschoben werden, bis sie mit ihrem dicken Kopf in etwa unter dem Abschnitt 34 des Tastfühlers 38 liegt, wie es hier dargestellt ist. Der Abschnitt 34 ist dadurch hochgeschwenkt worden, dass der Hebelarm 37 durch Abwärtsbewegung der Riegelstange 36 nach unten gezogen wird.

Der Anschlag 43 des Vorschiebers mit seinen stufigen Absetzungen 44 befindet sich in Warteposition und kann später in Richtung der strichpunktierten Linie gegen das hintere freie Ende des Hebelarms 37 des Tastfühlers vorgeschoben werden.

In Figur 6b ist der Tastfühler durch Anheben der Riegelstange 36 verschwenkt worden. Die Riegelstange steht mit dem Hebelarm 37 über eine Feder 62 in Verbindung. Wird die Riegelstange 36 in Pfeilrichtung angehoben, drückt auch die Feder den Hebelarm 37 nach oben, bis sich der Abschnitt 34 des Tastfühlers 38 auf die Garnele 61 auflegt. Die Riegelstange wird dann noch etwas weiter angehoben, so dass die Feder 62 zusammengedrückt wird und somit der Abschnitt 34 des Tastfühlers federnd auf der Garnele 61 liegt. Gleichzeitig fährt der hier nicht dargestellte Vorschieber 39 vor, um die Garnele noch weiter bis in ihre endgültige Position vorzuschieben. Dabei stösst der die Vorschiebebewegung des Vorschiebers 39 mitmachende Anschlag 43 mit einer seiner stufigen Absetzungen 44 an die untere Kante 63 des Hebelarmes 37 des Tastfühlers 38, so dass sein weiterer Vorschub begrenzt ist. Bei einer kleineren Garnele, bei der der Hebelarm 37 unter Wirkung der Feder 62 noch weiter nach oben geschwenkt ist, kann der Anschlag auch weiter unter der Kante 63 des Hebelarms vorgeschoben werden, d.h. der Anschlag kommt mit einer seiner oberen stufigen Absetzungen mit der Kante 63 in Anschlag. Bei einer grösseren Garnele wird der Vorschubweg des Vorschiebers kürzer, weil eine der ersten stufigen Absetzungen bereits unter die niedriger stehende untere Kante 63 des Hebelarms 37 greift, also anschlägt.

In Fig. 6b ist durch einen Pfeil angedeutet, dass der Anschlag 43 gegen den Hebelarm 37 vorfährt. Die Garnele 61 kann dabei durch den mit dem Anschlag 43 verbundenen Vorschieber, der hier nicht dargestellt ist, unter dem federnden Abschnitt 34 weiter verschoben werden, weil der Aufnehmer 26 nach unten abgesenkt ist und somit seine Nadeln 31 aus dem Garnelenkörper herausgezogen sind.

In Fig. 6c ist der Anschlag 43 soweit nach vorne gefahren worden, dass eine seiner weiter zurückliegenden oberen stufigen Absetzungen 44 an die untere Kante 63 des Hebelarmes 37 des Tastfühlers angeschlagen ist. Der Anschlag und damit auch der Vorschieber, kann nunmehr nicht weiter vorfahren, wodurch die richtige Positionierung der Garnele 61 gegeben ist. Gleichzeitig wird die Riegelstange 36 wieder in Pfeilrichtung nach unten gezogen, so dass nunmehr der Tastfühler starr verriegelt ist. Der Abschnitt 34, der vorher eine Tastfunktion erfüllt hat, übernimmt dadurch eine Funktion als Halteelement.

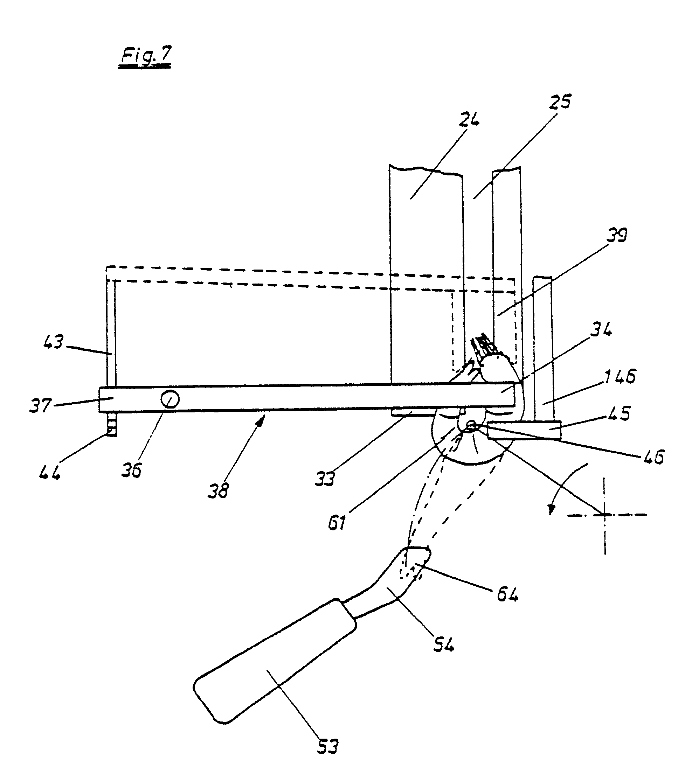

In Fig. 7 ist eine schematische Draufsicht auf den Bereich der Schäleinrichtung dargestellt, in welchem die Positionierstation an den Arbeitsbereich der Schälwerkzeuge grenzt. Gleiche Bauteile sind mit gleichen Bezugszahlen wie in den vorhergehenden Figuren bezeichnet.

Durch gestrichelte Linien ist der Vorschieber 39 eingezeichnet, der, wie vorgeschrieben, mit dem Anschlag 43 ausgerüstet ist, der gegen den Hebelarm 37 des Tastfühlers 38 anschlägt, wenn der Vorschieber die Garnele 61 in die gezeichnete Position vorschiebt, wobei der grösste Teil des gekrümmten Garnelenkörpers, wie dargestellt, über die freie Endkante 33 des Endbereiches 24 des Warteabschnitts der Transportrinne 5 vorsteht. Mit 25 ist wiederum der Längsschlitz im Endbereich 24 bezeichnet, in dem sich der Aufnehmer 26 bewegt, welcher die Garnele 61 dem Bereich des Tastfühlers 38 zuführt. Sobald die Riegelstange 36 den an und für sich federnden Tastfühler verriegelt hat, schliessen sich die Backen 45 der als Halteelement dienenden Klemme 146, so dass die Garnele 61 in der gezeichneten Position durch den haltenden Abschnitt 34 des Tastfühlers 38 und die Backen 45 der Klemme 146 gehalten wird.

Wie es bereits in bezug auf die Figur 4 beschrieben wurde, stösst von unten ein Dorn 46 in die vom gekrümmten Garnelenschwanz umschlossene Lücke vor, und der Dorn 46 kann auf einer kreisbogenförmigen Bahn, wie sie durch strichpunktierte Linie angedeutet ist, etwa auf dem eingezeichneten Radius, verschwenkt werden, wobei der Garnelenkörper gestreckt wird, bis ein Schwanzende 64 (durch gestrichelte Linien angedeutet) in dem Bereich zwischen den geöffneten Backen 54 der Klemmzange 53 liegt. Die Klemmzange 53 ist hier, im Gegensatz zur Fig. 4, in vorgeschwenkter Position gezeichnet.

Die Klemmzange 53 ist so ausgebildet, dass sie beim Vorschwenken das hintere freie Ende des gestreckten Schwanzes der Garnele zwischen ihren Backen 54 aufnimmt. Die Backen 54 werden geschlossen, und sobald die Klemmzange 53 zurückschwenkt, wobei sich ihr Abstand zu den Halteelementen 34, 45 wieder vergrössert, wird der Schwanzpanzer der Garnele von den zwischen den Halteelementen 34, 45 gehaltenen Kopfpanzerteilen abgezogen und getrennt. Da die Klemmzange 53 den hinteren freien Endbereich des Schwanzpanzers ebenfalls quetscht, wird in diesem Bereich auch das etwa im letzten Ring des Schwanzpanzers angewachsene Fleisch abgequetscht bzw. gelöst, so dass der Schwanzpanzer bei zurückschwenkender Klemmzange 53 leicht vom Fleisch abgezogen werden kann. Das vom Schwanzpanzer befreite Garnelenfleisch bleibt jedoch mit den in den Halteelementen 34, 35 gehaltenen Kopfpanzerteilen noch weiter verbunden und kann nunmehr von der Fleischzange 51 ergriffen und aus den Kopfpanzerteilen herausgezogen werden (Fig. 4).

Sobald Klemmzange und Fleischzange in ihre Ausgangsstellung zurückgeschwenkt sind (Fig. 4), werden die ergriffenen bzw. von den Halteelementen gehaltenen Garnelenteile freigegeben und ausgeworfen. Der Klemmzange 53 ist zur Verbesserung der Auswerferwirkung noch ein Abstreifer 154 (Fig. 4) zugeordnet.

**Patentansprüche**

1. Verfahren zum maschinellen Gewinnen des Schwanzmuskelfleisches von gekochten Garnelen (crangon vulgaris) durch Entfernen des dieses umschliessenden Schwanzpanzers, wobei die Garnelen einzeln und in einheitlicher Lage zugeführt und entkrümmt werden, und der Schwanzpanzer nach Deformation mindestens des Schwanzteils desselben entfernt wird, gekennzeichnet dadurch, dass
– jede Garnele an ihrem Kopfteil und mindestens dem ersten Schalenring des den Rumpf des Garnelenkörpers umschliessenden Schwanzpanzers gehalten, und
- das Schwanzmuskelfleisch von dem Kopfteil und durch die an diesem verbliebenen Schalenringe hindurch abgezogen wird.

2. Vorrichtung zur Durchführung des Verfahrens nach Anspruch 1, mit einer die Garnelen einzeln und in einheitlicher Lage bereitstellenden Zuführeinrichtung mit einer Transportrinne, und einer Einrichtung zum Entfernen des das Schwanzmuskelfleisch umschliessenden Schwanzpanzers, gekennzeichnet durch die Kombination folgender Elemente
- ein erstes als Aufnehmer (26) ausgebildetes Positionierelement, welches die bereitgestellte Garnele in den Arbeitsbereich eines als Halteelement ausgebildeten
- Tastfühlers (38) für die Tastung der Dicke der Garnele vorschiebt,
- ein zweites als Vorschieber (39) ausgebildetes Positionierelement, welches die unter dem Tastfühler (38) befindliche Garnele um einen jeweils aus dessen Messergebnis festgelegten Weg vorschiebt,
- einen Schwanzstrecker (47) zum Entkrümmen des Garnelenschwanzes,
- eine den Garnelenschwanz klemmend erfassende Klemmzange (53) und
- eine das Schwanzmuskelfleisch entnehmende Fleischzange (52)

3. Vorrichtung nach den Ansprüchen 2 und 3, gekennzeichnet dadurch, dass der Tastfühler (38) als federbelasteter Hebel mit einem in die Bewegungsbahn des Vorschiebers (39) vorstehenden Hebelarm (37) ausgebildet ist, und dass der Vorschieber (39) einen an den Hebelarm (37) anschlagenden Anschlag (43) mit einer in den Schwenkweg des Hebelarmes (37) vorschiebbaren geneigten, vorzugsweise mit stufigen Absetzungen (44) versehenen Flanke aufweist.

4. Vorrichtung nach mindestens einem der vorhergehenden Ansprüche, dadurch gekennzeichnet, dass eine dem Tastfühler (38) in Arbeitsrichtung der Vorrichtung unmittelbar nachgeordnete, taktweise betätigbare Klemme (146) vorgesehen ist, deren Backen (45) unmittelbar neben der freien Endkante (33) des Endbereiches (24) des Warteabschnittes (23) der Transportrinne (5) angeordnet sind.

5. Vorrichtung nach mindestens einem der Ansprüche 2, 4 und 5, dadurch gekennzeichnet, dass dem Tastfühler (38), der Klemme (146), der Fleischzange (52) und der Klemmzange (53) Mittel zum Auswerfen der von ihnen jeweils gehaltenen Garnelenbestandteile zugeordnet sind.

6. Vorrichtung nach Anspruch 6, dadurch gekennzeichnet, dass als Mittel zum Auswerfen gebündelte Luftstrahlen vorgesehen sind.

7. Vorrichtung nach einem der Ansprüche 2 und 6, dadurch gekennzeichnet, dass der Klemmzange (53) ein in ihren Bewegungsweg vorstehender Abstreifer (154) zusätzlich zugeordnet ist.

8. Vorrichtung nach einem der Ansprüche 2 und 8, dadurch gekennzeichnet, dass die der Klemmzange (53) und den Halteelementen (34, 45) zugeordneten Luftstrahlen in die gleiche Richtung ausgerichtet sind und dass die Richtung des der Fleischzange (52) zugeordneten Luftstrahls etwa quer dazu ausgerichtet ist.

9. Vorrichtung nach Anspruch 2, gekennzeichnet, dass eine die Funktionselemente taktweise betätigende Folgesteuerung vorgesehen ist, welche mindestens eine umlaufend angetriebene Nockenwelle (57) mit den einzelnen Funktionselementen zugeordneten und diese über mechanische Gestänge bewegenden Steuernocken (58) umfasst.

10. Vorrichtung nach Anspruch 2, dadurch gekennzeichnet, dass die Zuführeinrichtung ein Vereinzelungsmagazin (3) mit einem topfförmigen Schwingförderer und eine zu der Einrichtung zum Entfernen des Schwanzpanzers führende Transportrinne (5) umfasst.

11. Vorrichtung nach Anspruch 10, gekennzeichnet dadurch, dass die Transportrinne (5) eine Ausricht- und Wendestation (6, 7) und eine Kontrollstation (8) umfasst, welche ein Mittel zum Auswerfen nicht einwandfrei ausgerichteter Garnelen aufweist.

## Claims

1. Process for extracting the tail flesh from cooked shrimps (crangon vulgaris) by removing the tail shell surrounding this flesh by mechanical means, whereby the shrimps are positioned singly and in the same position and straightened out, and the tail shell is removed after deforming at least its tail section, characterised by the fact that:
- each shrimp is grasped by its head section and at least the first ring segment of the shell surrounding the trunk of the shrimp body, and
- the shrimp flesh is pulled off the head section and drawn out through the remaining shell ring segments attached to the latter.

2. Equipment for carrying out the process in claim 1, with a preparatory feed device with a transport trough, which positions the shrimps singly and in the same position, and a device for removing the tail shell surrounding the tail flesh, characterised by the combination of the following elements:
- an initial positioning element (26) in the shape of a scoop, which pushes the shrimps on into the working zone of a
- sensor (38), in the shape of a retaining element, for detecting the width of the shrimp,
- a second positioning element in the shape of a pusher (39), which pushes the shrimp which is under the sensor (38) onwards by a distance determined by the result of the latter's measurement,
- a tail stretcher (47) to straighten out the shrimp tail,
- a clamp (53) to grip the shrimp tail, and
- flesh tongs (52) to remove the tail flesh.

3. Equipment as in claims 2 and 3, characterised by the fact that the sensor (38) is in the form of a spring-loaded lever with a lever arm (37) projecting into the path of the pusher (39), and that the pusher (39) has a stop catch (43) abutting against the lever arm (37), with an inclined, preferably stepped, edge (44) which can move forwards.

4. Equipment as in at least one of the above claims, characterised by the fact that a gripping device (146) is placed immediately after the sensor (38), operating in the working direction of the device and actuated cyclically, the jaws (45) of which are arranged immediately next to the feed end edge (33) of the end region (24) of the waiting section (23) of the transport trough (5).

5. Equipment as in at least one of claims 2, 4 and 5, characterised by the fact that the sensor (38), the gripping device (146), the flesh tongs (52) and the clamp (53) are provided with means for ejection of the shrimp parts held by them.

6. Equipment as in claim 6, characterised by the fact that concentrated air jets are provided as the ejection means.

7. Equipment as in one of claims 2 and 6, characterised by the fact that the clamp (53) is also provided with a wiper (154) projecting into its path of movement.

8. Equipment as in one of claims 2 and 8, characterised by the fact that the air jets provided for the clamp (53) and holding elements (34, 35) are aligned in the same direction, and that the direction of the air jet provided for the flesh tongs (52) is approximately at right angles to this.

9. Equipment as in claim 2, characterised by the fact that an automatic sequence control is provided to actuate the functional elements cyclically, comprising at least one rotating camshaft (57) with the sequence switch cams (58) assigned to the individual function elements and actuating the latter by means of mechanical linkages.

10. Equipment as in claim 2, characterised by the fact that the feed device includes a separating magazine (3) with a cup-shaped vibration conveyor and a transport through (5) leading to the equipment for removing the tail shell.

11. Equipment as in claim 10, characterised by the fact that the transport trough (5) includes an alignment and turning station (6, 7), and checking station (8) fitted with a means of ejecting improperly-aligned shrimps.

**Revendications**

1. Procédé pour décortiquer mécaniquement des crevettes, (crangon vulgaris) par enlèvement de la carapace entourant la queue de la crevette, procédé par lequel les crevettes sont amenées une à une, dépliées et la crevette, après déformation d'au moins la partie constituant sa queue, est dénudée de sa carapace rejetée, caractérisé en ce que chaque crevette est retenue par sa partie de tête et par au moins le premier anneau de la carapace entourant sa queue, et ensuite la chair musclée de la queue est séparée de la tête et retirée à travers les anneaux de carapace qui restent rattachés à la partie de tête.

2. Dispositif de mise en œuvre du procédé selon la revendication 1 comprenant un dispositif d'amenée des crevettes une à une, constitué par une auge de transport et un dispositif pour éliminer la carapace de la queue qui renferme la chair musclée de la crevette caractérisé en qu'il comprend en association les organes suivants:
– un premier organe de positionnement ayant la forme d'un organe de prise (26), amenant la crevette déjà mise dans une position appropriée au travail, dans la zone d'action d'un palpeur (38) ayant la forme d'un organe de retenue, destiné à palper et déterminer l'épaisseur de la crevette,
– un second organe de positionnement ayant la forme d'un organe poussoir (39) destiné à pousser la crevette se trouvant en dessous du palpeur (38) le long d'un parcours déterminé d'après les mesures fournies par le palpeur (38),
– un organe (47) pour redresser la queue afin de supprimer la courbure de la queue de la crevette,
– une pince à mâchoires (53) destinée à accrocher la queue de la crevette et
– une pince à chair (52) destinée à retirer la chair dénudée de la carapace de queue de la crevette.

3. Dispositif suivant la revendication 2 caractérisé en ce que le palpeur (38) est formé d'un levier pourvu d'un ressort, comprenant un bras de levier (37) placé sur le trajet de déplacement de l'organe poussoir (39), et en ce que cet organe poussoir (39) comporte une butée (43) pour le bras (37), cette butée étant pourvue d'une partie plane inclinée et taillée en gradins (44) coulissant sur le trajet de basculement du bras (37).

4. Dispositif suivant au moins une des revendications précédentes caractérisé en ce qu'il comprend une pince (146) actionnée rythmiquement placée immédiatement après le palpeur (38), dans le sens de circulation de la crevette, les mâchoires (45) de cette pince (145) étant placées immédiatement à côté du bord libre (33) de la zone d'extrémité (24) de la section d'attente (23) de l'auge (5) de transport.

5. Dispositif suivant l'une quelconque des revendications 2 à 4 caractérisé en ce qu'au palpeur (38), à la pince (146) et aux pinces à chair (52) et à mâchoires (53) est adjoint un dispositif d'éjection des parties de crevette retenues par eux.

6. Dispositif suivant la revendication 5 caractérisé en ce qu'il comporte des buses à jet d'air comprimé comme dispositif d'éjection.

7. Dispositif suivant l'une quelconque des revendications 2 et 6 caractérisé en ce que la pince à mâchoires (53) est pourvue de raclettes à essuyer (154) placées sur son chemin.

8. Dispositif suivant l'une quelconque des revendications 2 à 7 caractérisé en ce que des jets d'air adaptés sur la pince à mâchoires (53) et sur les organes de retenue (34, 45) sont orientés dans la même direction et en ce que le jet d'air affecté à la pince à chair (51) est orienté transversalement par rapport à cette pince.

9. Dispositif suivant la revendication 2 caractérisé en ce qu'il comporte une commande séquentielle actionnant les organes fonctionnels de manière rythmique, cette commande comprenant au moins un arbre à cames (57) entraîné de manière continue, pourvu de cames (58) affectées chacune à l'un des organes fonctionnels et commandant ces organes par voie mécanique à l'aide de tiges.

10. Dispositif suivant la revendication 2 caractérisé en ce que le dispositif d'amenée des crevettes comprend une trémie en forme de cuvette (3) pour distribuer les crevettes une à une, fonctionnant en transporteur oscillant, et une auge (5) de transport conduisant au dispositif d'enlèvement de la carapace de la queue.

11. Dispositif suivant la revendication 10, caractérisé en ce que l'auge (5) de transport comprend une station d'orientation (6) et une station de retournement (7) ainsi qu'une station de contrôle (8) présentant des moyens pour éjecter les crevettes qui ne sont pas orientées de manière satisfaisante.

Fig.1

Fig.2

0129567

Fig. 3

17

Fig.4

58

57

55

56

22

52

51

50

53

37

36

54

154

49

46 48

47

33

34

35

45

24

31

26

146

38

44

43 41 42 29 30 39 40

27

23

28

32

0129567

_Fig. 5_

**0129567**

Fig. 6

a)

_Fig.7_